**Europäisches Patentamt**

**European Patent Office**

**Office européen des brevets**

(11) Publication number: **0 211 841**
**B1**

⑫ **EUROPEAN · PATENT SPECIFICATION**

(45) Date of publication of patent specification: **11.10.89**

(21) Application number: **85902172.7**

(22) Date of filing: **02.05.85**

(86) International application number:
**PCT/NL85/00017**

(87) International publication number:
**WO 85/05175 21.11.85 Gazette 85/25**

(51) Int. Cl.⁴: **G 01 B 3/12, G 01 B 21/02**

(54) A TRACKING, MEASURING AND CALCULATING INSTRUMENT FOR THE DETERMINATION OF LENGTHS, AREAS, PERIPHERIES AND VOLUMES.

(30) Priority: **03.05.84 NL 8401419**

(43) Date of publication of application:
**04.03.87 Bulletin 87/10**

(45) Publication of the grant of the patent:
**11.10.89 Bulletin 89/41**

(84) Designated Contracting States:
**AT BE CH DE FR GB IT LI LU NL SE**

(56) References cited:
**DE-A-2 751 620**
**GB-A-2 115 139**
**US-A-3 742 243**
**US-A-4 253 239**
**US-A-4 377 850**
**US-A-4 383 301**

(73) Proprietor: **RIJLAARSDAM, Cornelis Elisabeth**
**Julianastraat 48**
**NL-2405 CJ Alphen aan de Rijn (NL)**

(72) Inventor: **RIJLAARSDAM, Cornelis Elisabeth**
**Julianastraat 48**
**NL-2405 CJ Alphen aan de Rijn (NL)**

(74) Representative: **Kooy, Leendert Willem et al**
**OCTROOIBUREAU VRIESENDORP & GAADE**
**P.O. Box 266**
**NL-2501 AW The Hague (NL)**

Courier Press, Leamington Spa, England.

## Description

The present invention relates to a measuring and calculating instrument being provided with a rotatable measuring wheel, with which lines on one, two or three-dimensional objects can be followed, and a casing for said measuring wheel, said casing being connected to a housing and comprising a bearing means for the shaft of the measuring wheel, said housing comprising means converting revolutions of said measuring wheel into a number of electrical pulses representing a distance being covered by said measuring wheel, a calculator means for processing said pulses, and display means and selector means for monitoring and controlling said calculator means, respectively.

Such an instrument is known from DE—A—2,751,620. The instrument shown therein should be held in the hand during its use, like a glass cutter while cutting glass, and it should be moved along the object in this way. For this reason, however, it is difficult to accurately follow sharply curved lines on the object, because of the absence of another point of support than the one of the measuring wheel on the object.

The measuring and calculating instrument from US—A—4,383,301, which has the shape of a rectangular box, is not fit for accurately sensing sharply curved lines, either, because of its size and of the fact that the portion of the measuring wheel projecting out of the casing cannot be followed sufficiently from above, as is required with curvimeters.

The purpose of the present invention is to provide a measuring and calculating instrument, causing such a conversion of the wheel movement in the pulses that the instrument may have the from and dimensions of a pen and hence can be held like a pen, giving further support in use and enabling the measuring of even sharply curved lines.

For this purpose the housing is implemented substantially in the shape of and having the dimensions of a pen containing a lightweight power supply, the casing including the measuring wheel being located at the tapered end of the stem of said pen-like housing, said casing comprising a means for transforming the rotation of the measuring wheel into an output at an output means of the casing, and the said output means comprises a shaft one end of which within said casing being coupled to said measuring wheel by a mechanical transmission and the other end outside said casing and inside said housing being coupled to an interruptor means.

A number of embodiments of the invention will be described on the basis of the associated drawings. As an example figure 1 shows a side view and plan of a longitudinal section. Figure 2 shows the exterior of one version. Figure 3 shows a calculator receiving the necessary pulses via an electromagnetic generator. Figure 4 shows one way of providing a swivelling motion for the tracking wheel. Figure 5 gives an example in which the swivelling wheel is fitted with an electromagnetic generator. Figure 6 shows a version with which pulses are obtained via optical interruption which can be produced independently of the instrument. Figure 7 shows that signals can be counted and registered with a combination of colour-sensitive sensors. Figures 8a and 8b give a plan and side view of a version with a flat keyboard. Figures 9a and 9b show a plan and side view of a version with a caster tracking wheel. Figures 10a and 10b are cross-sections of the mechanics in front and side views. Figures 11a and 11b are cross-sections of the caster wheel with part front and side views.

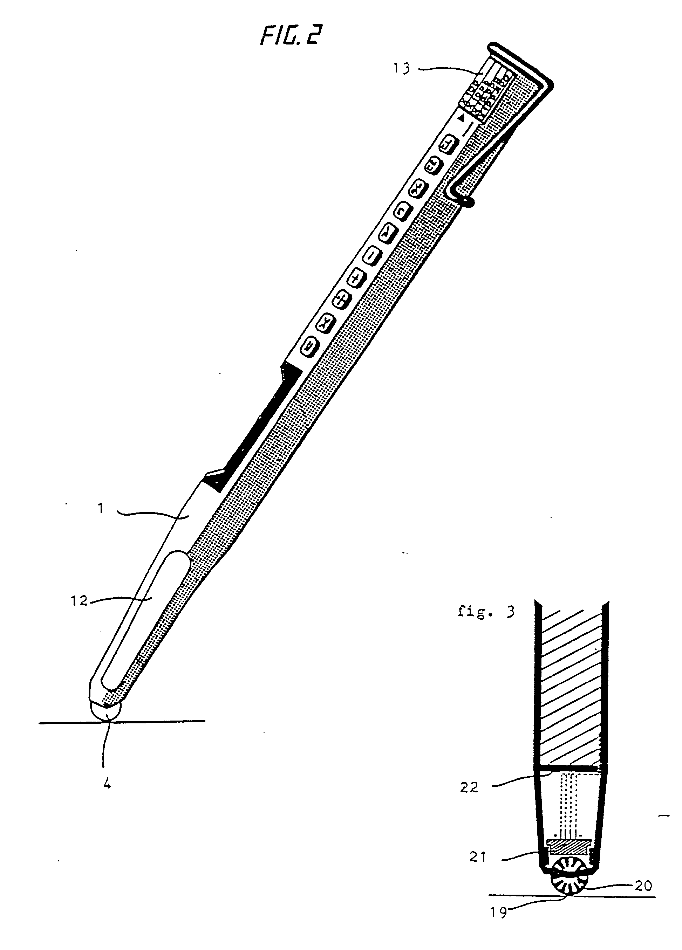

It is to be noted that, as the embodiments of the instrument according to figures 3, 5, 6 and 7, do not comprise said shaft extending from the case into the housing, these embodiments are not related to the invention as claimed in claim 1.

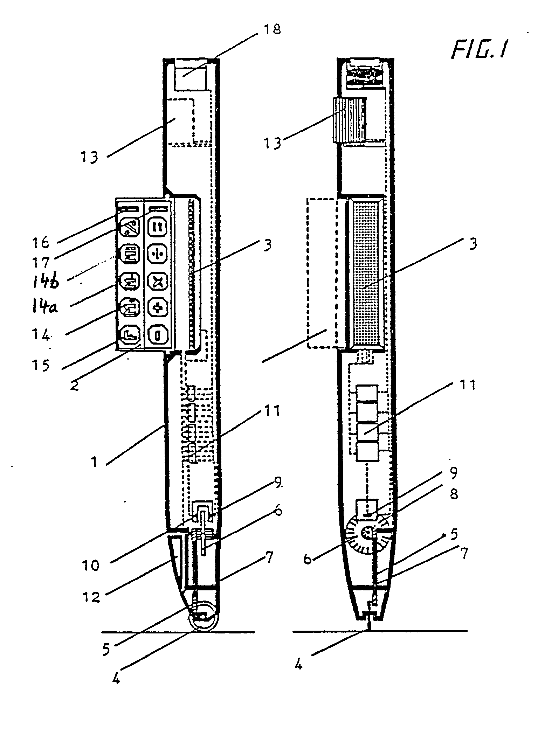

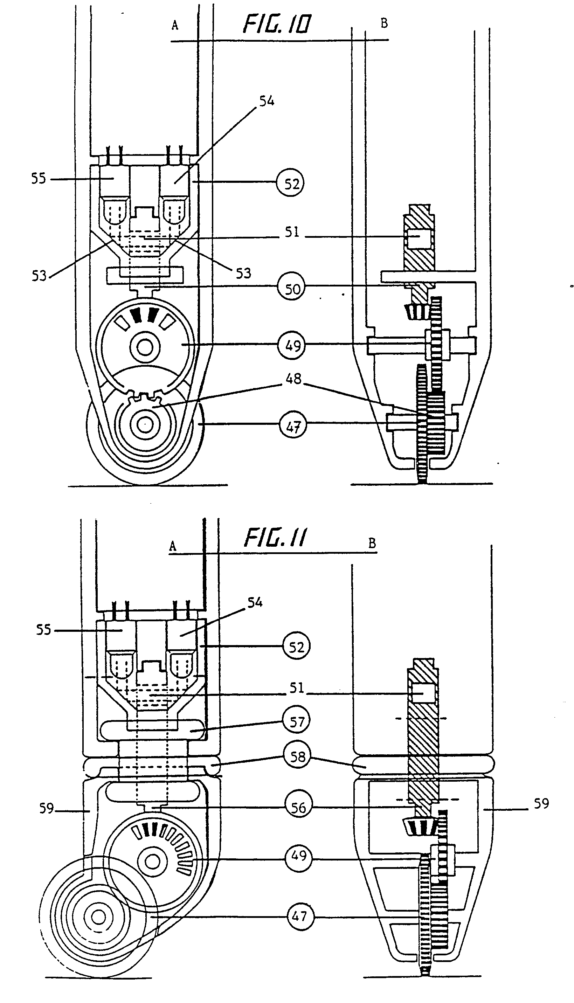

The figures will now be described in detail by number. Figure 1 shows a side view and plan of a longitudinal section whereby the keyboard 2 can be opened and closed with respect to the housing 1. When the keyboard 2 is closed it shields the window 3 whereby the keyboard 2 and the window 3 are protected against moisture and dirt, providing safe storage in clothing or in a bag. In the point of the instrument is a tracking wheel 4, that can rotate perpendicularly with respect to the longitudinal axis of the instrument, and with which the surface of an object can be followed. This tracking wheel 4 is provided on one face with a gear wheel driving a shaft 5, which in turn drives the disk 6. The disk 6 is provided with a number of narrow slots 8 or holes at regular intervals. These slots 8 are designed to create a pulse train by interrupting a light beam coming from light-generating element 9 and passing to a signal-receiving element 10 located on the other side of the disk 6, which converts the pulse train into an input signal for the calculator 11. With the opto-coupling system described above disk 6 can also incorporate other types of interruptor devices such as will be described under figures 10 and 11. The calculator 11 can, for example, be in the form of a microprocessor consisting of one or more calculator chips as is known in calculator technology. The partition 7 provides sealing for the housing whereby elements within the housing are protected against moisture and dirt.

A start key 12, separately located for ergonometric reasons allows the user to start and to interrupt the measuring or tracking function whereby during measurements of different lines accidental movements of the tracking wheel do not lead to interference with the measurement results. This start key 12 is mounted on the upper surface and is located in the width in such a way that the start key 12 is easily accessible. Thus, during the calculation of, for example, areas the length of the area to be measured is first measured by pressing the start key 12 and then after releasing key 12 entering the multiplication factor and then measuring the width after pressing key 12. When the '=' key is pressed, the calculated result is displayed on a window with, for example, digital symbols.

In the functional design of the calculator the basis was that calculation should be possible with predetermined systems of units and scales, i.e. that before or during or after the tracing operation an arithmetical factor can be selected whereby the calculations are performed in the required system of units and scale. To this end figure 1 shows a selector switch 13 with which a number of the most-common sytems of units or scales are preselected. Variations can be obtained with the aid of the calculator.

The calculator to be used determines the division of the keyboard whereby the fix or selector key displays which scale or system of units has been selected. The function of this key 15 can be modified for different calculators. The narrow keys 16 and 17 serve to switch the electrical supply on and off. Keys 14, 14a and 14b control memory functions. Space 18 is intended for the power supply, batteries for example.

Figure 2 shows the exterior of another version, in which the keys are arranged on the instrument for easy access, and of which the pen shape assists tracing of straight and curved lines. The illustration of the left-hand side of the instrument shows the keys for a number of arithmetical functions, whereas the non-illustrated right-hand side carries the numerals 0—9, the decimal sign and the memory functions.

Equally applicable to the version shown in figure 1 and to that in figure 2 is the fact that if different calculators are used modified keyboards and function keys will also be required.

Figure 3 illustrates a method which which the pulses required by the calculator are amplified by an electromagnetic generator, well known as the Hall generator. The tracking wheel 19 is fitted with small magnetic elements 20 which generate electrical pulses in the generator 21 when the tracking wheel 19 rotates. The impulses are fed to a contact on the partition 22 and from there transmitted to the calculator.

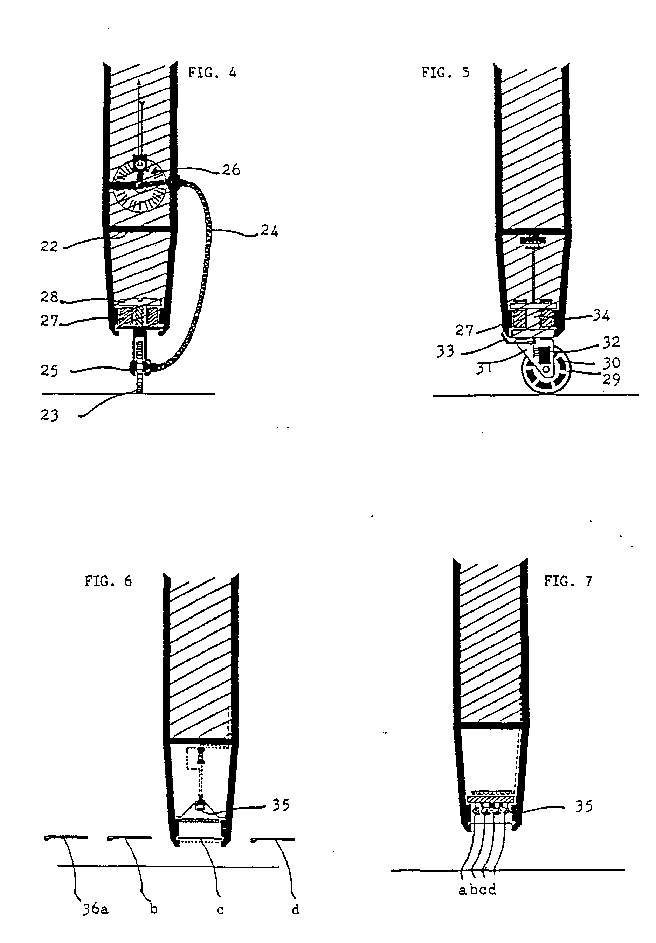

Figure 4 shows one solution to the problem that can arise when the instrument has to trace complex curves, on a road map, for example, and curves of small radius. The swivel action of the tracking wheel offers the advantage that in addition to closer tracing of curves, the instrument can remain comfortably in the hand and that the keyboard and any window for the display of measured and calculated results remains better visible. The flexible shaft 24 is attached at one end to the axis of rotation of the tracking wheel 23, and at the other end to an input device on the housing for driving an interrupter. An incompletely circular shape of the locknut 28 ensures that the swivelling wheel can swivel no more than 180 degrees, for example, whereby the flexible shaft is not impeded or damaged.

Figure 5 shows a swivelling wheel in which an electromagnetic generator is mounted. This example of a swivelling wheel, in a version shown in side view, shows the tracking wheel 29 with the built-in magnetic elements 30. The generator 32 lies within the fork of the swivel device 32, depending on the dimensions chosen, or on the face of the tracking wheel or above the tracking wheel in which case the magnetic elements are mounted further towards the periphery of the tracking wheel. Swivelling of the wheel can be blocked by sliding a locking device 33 against the serrations in the housing whereby measurements along a straight line are made easier. The vertical shaft 34 includes a device to prevent unlimited rotation of the swivelling wheel.

Figure 6 shows a totally different way of recognizing pulses. Employing the fact that the swivelling wheels in figures 3, 5 and 10a and 10b can be removed and replaced by, for example, an optical device for converting light signals, for example, into useful pulses, and a distinction can be made between, for example, stripes of different colours on an object by mounting colour filters. Invisible light can also be registered in this manner. The colour filters are interchangeable and can be combined.

Figure 7 shows an assembly of colour-sensitive sensors, which makes it possible for signals from, for example, differently-coloured areas on drawings, maps and objects to be differentiated and recognized. The colour-sensitive sensors consist of photoelectric cells 35 to which different colour filters have been applied by means of vapour deposition. These photocells with optical filters 35a, b, c and d are interchangeable. This method provides the possibility via colour detection of recognizing and processing distinctive information from objects or parts of objects with the calculator on the basis of their colour.

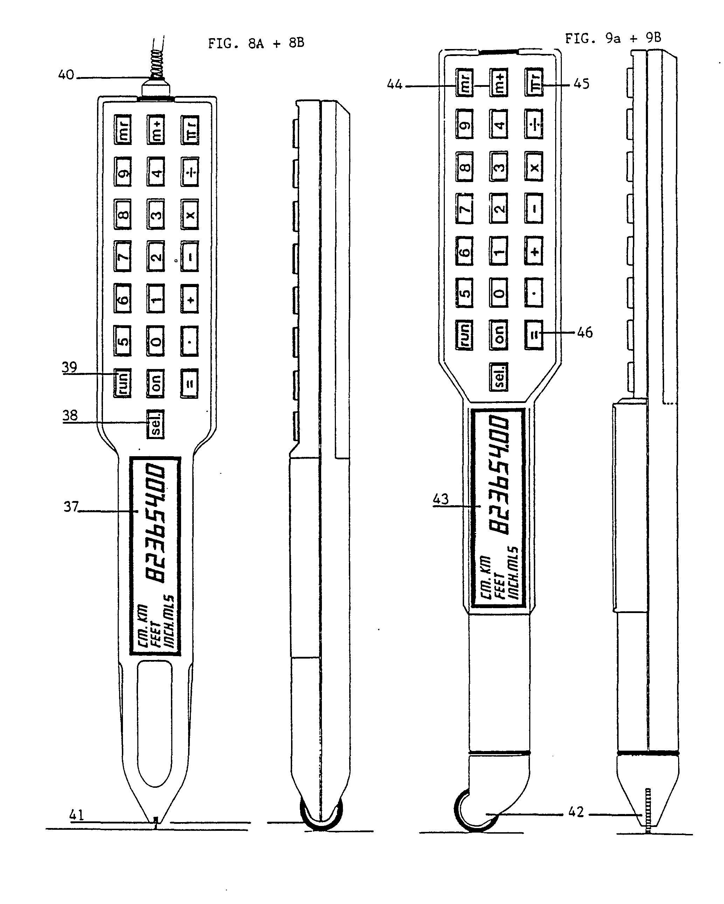

Figure 8a is a plan view, figure 8b the side view of a version in which the keyboard is completely flat whereby the instrument can be used as a calculator when laid flat. The window shown in figure 8a shows, for example, which system of units has been entered in the calculator as fixed conversion factors. The drawing shows a number of systems of units although in practice the window 37 will display only the system of units selected with the selector key 38. Conversion to another system of units can be made by using key 38 and then the key '=' after the required system of units has appeared in the window. The connector 40 is the cable over which stored data can be transmitted, to a printer in particular, for storing the processed measurement results, but also to a computer system for further processing or to databank systems. The tracking wheel 41 will be described in detail under figures 10a and 10b, with the understanding that several methods of interruption can be employed other than the optocoupling and the electromagnetic generation to be described.

Figures 9a and 9b showr the plan and side views of the instrument with a caster tracking wheel 42. It will be clear that this version in particular provides optimal facility for the user accurately to trace a web of straight and curved lines, whereby the window 43 remains clearly visible and the keyboard accessible. The keyboard in figure 9a provides memory functions whereby it is possible to store results in between different measurements and to combine them with each other. The memory functions are controlled by keys 44. Key 45 indicates the use of the fixed conversion factor pi which allows the user to determine in a simple manner the area of a circle on the basis of the measurement of its radius, or to calculate the volume of a silo. Key 46 provides in the first place the result calculated by the calculator in the window. Entering '=' a second time when equipment is connected starts the transfer of the measured or calculated results shown in the window together with output of data in the memory. The caster tracking wheel will be discussed in detail under figures 11a and b.

Figures 10a and 10b provide an example of the manner in which tracing is converted via tracking wheel 47, on which a gear wheel 48 transmits the rotation of tracking wheel 47 via a gear wheel 49 to the shaft 50. This shaft 50 protrudes into a reflector housing 52 and has at one end gear teeth for obtaining from gear wheel 49 a rotary motion, and at the other end an aperture 51 diametrically through the shaft 50, whereby when the shaft 50 rotates it alternately opens and closes a hollow space in the reflector housing 52. On the interior surface of the reflector housing 52 are two surfaces 53 which serve to reflect light signals in a selected direction. It is thus possible for a light signal from a light-generating element 54, an LED for example, to be directed by reflection through the aperture 51, whereby rotation of the shaft 50 by, for example, 90° closes the hollow space in the reflector housing 52. As soon as shaft 50 rotates a further 90° the aperture 51 opens for transmission of the light signal from element 54, and the light signal can be received via reflecting surface 53 by a receiving element 55, which can be, for example, a phototransistor. The manner in which the transmitting element 54 and the receiving element 55 are located with respect to each other and to the interruption-generating shaft 50 offers a number of specific advantages which greatly contribute to meeting the requirements to be placed on the instrument, such as the proportions and volume and weight of the power supply. This creates an opto-coupling with the smallest-possible dimensions of the opto-coupling working surfaces, since the elements 54 and 55 need not be mounted "facing" each other in which case their length, greater than their diameter, would create a relatively thick opto-coupling. In addition, there is a "dark environment" within the reflector housing 52 whereby even with a low current consumption a light signal is generated strong enough to attain the switching level of element 55, whereby a relatively small power supply, button cells for example, will provide sufficient power for the opto-coupling as well as the calculator and a display window. In addition the reflector housing provides good protection against external radiation, and protects the elements against dirt. Another example of interruption is a version on the basis of figures 10a and 10b in which the elements 54 and 55 together with the housing 52 are replaced by, for example, an electromagnetic generator and in which a permanent magnet is mounted in the aperture 51 whereby at every rotation of shaft 50 an electrical signal is generated for the calculator.

Figures 11a and 11b show in general line the same interruption technique as in figures 10a and 10b. In this case, however, it concerns the caster movement of the tracking wheel with respect to the housing, although the castering part forms, both constructionally and functionally, such an essential part of the whole instrument that we are of the opinion that we can speak of a single instrument housing. The castering part 59 rotates around a connecting tube 57, whereby the spacer ring 58 maintains the caster in the correct position with respect to the instrument proper, absorbs exterior forces and provides sealing against dust and moisture. Several interruption techniques can be applied in a given solution to the castering tracking wheel described here.

Thus, variations in the calculating equipment described in this application are possible whereby another arithmetical program can be envisaged. Nonetheless these variations are also considered to fall within the scope of this invention.

**Claims**

1. A measuring and calculating instrument being provided with a rotatable measuring wheel (4), with which lines on one, two or three-dimensional objects can be followed, and a casing for said measuring wheel, said casing being connected to a housing (1) and comprising a bearing means for the shaft of the measuring wheel (4), said housing comprising means converting revolutions of said measuring wheel into a number of electrical pulses representing a distance being covered by said measuring wheel, a calculator means for processing said pulses, and display means and selector means for monitoring and controlling said calculator means, respectively, characterized in that said housing (1) is implemented substantially in the shape of and having the dimensions of a pen containing a lightweight power supply, the casing including the measuring wheel being located at the tapered end of the stem of said pen-like housing (1), said casing comprising a means for transforming the rotation of the measuring wheel into an output at an output means of the casing and in that said output means comprises a shaft one end of which within said casing being coupled to said measuring wheel by a mechanical transmission and the other end outside said casing and inside said housing being coupled to an interruptor means.

2. Measuring and calculating instrument according to claim 1, characterized in that said casing including the measuring wheel is rotatable about an axis being spaced from the shaft of the measuring wheel and at an angle of 90° therewith, and being at least substantially coaxial with the longitudinal axis of the housing (1).

3. Measuring and calculating instrument according to claim 1 or claim 2 characterized in that said shaft (50, 56) is the input means of a dark room (52) which dark room includes an optoelectronic reader of particular angular positions of said shaft (50, 56) making up said interruptor means, and a suitable light source.

**Patentansprüche**

1. Ein Mess- und Recheninstrument versehen mit einem rotierbaren Messrad (4), mit welchem Linien auf ein-, zwei- oder drei-dimensionalen Objekten gefolgt werden können, und mit einem Kasten für dieses Messrad, welcher Kasten mit einem Gehäuse (1) verbunden ist und einem Lagerorgan für die Welle des Messrades (4) enthält, welches Gehäuse Organe enthält zum Umsetzen von Umdrehungen dieses Messrades in einer Anzahl von elektrischen Impulsen die eine Entfernung vertritt die von diesem Messrade durchgefahren wird, ein Rechenorgan zum Bearbeiten dieser Impulsen, und Anzeige- und Selektierorgane zum Folgen und Regulieren dieser Rechenorgane, bzw., dadurch gekennzeichnet, dass dieses Gehäuse (1) im wesentlichen in der Form einer Schreibfeder ausgeführt ist und die Dimensionen einer Schreibfeder hat und eine leichtgewichte Speisung enthält, wobei der Kasten sich einschliesslich des Messrades am konischen Ende des Schaftes dieses Schreibfederformigen Gehäuses (1) befindet, welcher Kasten ein Organ zum Transformieren der Drehung dieses Messrades in einer Ausgang an einem Ausgangsorgan des Kastens enthält und dadurch, dass dieses Ausgangsorgan eine Welle enthält dessen eine Ende innerhalb dieses Kastens mit diesem Messrad durch eine mechanische Transmission gekuppelt ist und das andere Ende ausserhalb dieses Kastens, und innerhalb dieses Gehäuses, an einem Unterbrechungsorgan gekuppelt ist.

2. Ein Mess- und Recheninstrument nach Anspruch 1, dadurch gekennzeichnet, dass der Kasten einschliesslich des Messrades rundum eine Achse rotierbar ist die in einer Entfernung von der Welle des Messrades und in einem Winkel von 90° mit der Welle ist, und zu mindestens wesentlich koaxial zur Längsachse des Gehäuses (1) ist.

3. Ein Mess- und Recheninstrument nach Anspruch 1 oder 2, dadurch gekennzeichnet, dass die Welle (50, 56) das Eingangsorgan einer Dunkelkammer (52) ist, welche Dunkelkammer ein opto-elektronischer Leser von bestimmten Winkelpositionen dieser Welle (50, 56), und eine geeignete Lichtquelle enthält, welche Welle das Unterbrechungsorgan bildet.

**Revendications**

1. Appareil de mesure et de calcul, comportant une roue de mesure rotative (4) par laquelle des lignes sur des objets à une, deux ou trois dimensions pouvant être suivies, et une caisse pour ladite roue de mesure, ladite caisse étant reliée à un boîtier (1) et pourvue d'un moyen pour supporter l'arbre de la roue de mesure (4), ledit boîtier comprenant des moyens pour convertir les révolutions de ladite roue de mesure dans un certain nombre d'impulsions électriques qui représentent une distance couverte par ladite roue de mesure, un calculateur pour traiter lesdites impulsions, ainsi que des moyens de visualisation et des moyens de sélection pour observer et contrôler ledit calculateur, caractérisé en ce que le boîtier (1) est essentiellement réalisé sous la forme et les dimensions d'un stylo ayant des moyens d'alimentation légers, la caisse comportant la roue de mesure étant positionnée à l'extrémité effilée de la tige dudit boîtier sous forme de stylo (1), ladite caisse étant munie de moyens pour transformer la rotation de la roue de mesure en un signal de sortie à des moyens de sortie du boîtier et en ce que lesdits moyens de sortie comportent un arbre, une extrémité duquel étant accouplée à ladite roue de mesure par l'intermédiaire d'une transmission mécanique et l'autre extrémité à l'extérieur de ladite caisse et à l'intérieur dudit boîtier étant accouplée à un interrupteur.

2. Appareil de mesure et de calcul selon la revendication 1, caractérisé en ce que ladite caisse comportant la roue de mesure est rotative autour d'un axe espacé de l'arbre de la roue de mesure et formant avec celui-ci un angle de 90°, et au moins essentiellement coaxiale avec l'axe longitudinal du boîtier (1).

3. Appareil de mesure et de calcul selon la revendication 1 ou 2, caractérisé en ce que l'arbre (50, 56) constitue l'entrée d'une chambre noire (52) qui renferme un lecteur opto-électronique de certaines positions angulaires dudit arbre (50, 56) constituant ledit interrupteur, et une source lumineuse appropriée.

FIG.1

FIG. 2

13

1

12

4

fig. 3

22

21

20

19

EP 0 211 841 B1

FIG. 4

26

22

24

28

27

25

23

FIG. 5

27
33
31

34
32
30
29

FIG. 6

35

36a    b    c    d

FIG. 7

35

a b c d

3

EP 0 211 841 B1

FIG. 8A + 8B

FIG. 9a + 9B

4

FIG. 10

FIG. 11

5